# EUROPÄISCHE PATENTSCHRIFT

(11) **EP 1 518 846 B1**
(45) Veröffentlichungstag und Bekanntmachung des Hinweises auf die Patenterteilung: **18.04.2007**
(21) Anmeldenummer: 04018320.4
(22) Anmeldetag: 03.08.2004
(51) Int. Cl.: C04B 41/71

(54) **Betonformkörper mit hohem Glanz, Verfahren zu deren Herstellung und deren Verwendung**
Moulded concrete article having high gloss, method of making the same and use thereof
Articles moulés en béton à haute brillance, leur procédé de fabrication et leur utilisation

(30) Priorität: 22.09.2003 DE 10343726
(43) Veröffentlichungstag der Anmeldung: 30.03.2005
(73) Patentinhaber: Celanese Emulsions GmbH, 61476 Kronberg/Ts. (DE)
(72) Erfinder: Apitz, Gregor, Dr., 65817 Eppstein (DE); Machnik, Helga, 61398 Schmitten (DE); Kremer, Hans Walter, 65611 Brechen (DE); Krieger, Stephan, Dr., 65719 Hofheim (DE); Knell, Klaudia, 63776 Mömbris (DE)
(74) Vertreter: Ackermann, Joachim

(56) Entgegenhaltungen:
- EP-A- 1 006 094
- DE-A1- 19 812 143

## Beschreibung

Die vorliegende Erfindung betrifft die Herstellung von glänzenden transparenten Beschichtungen auf Betonformkörpern sowie die Verwendung der Formkörper als Baustoffe.

Bei der Herstellung von Betonformkörpern, wie Betondachsteinen, wird eine pastöse Mörtelmasse nach der Formgebung, in der Regel meist vor der Härtung bzw. Abbindung, zum Schutz vor Kalkausblühungen und zur Erzielung von dekorativen Effekten, mit einer Farbe oder einem Lack beschichtet. Die anschließende Härtung bzw. Abbindung der Betonformkörper erfolgt dann zusammen mit der Trocknung der Beschichtung bei erhöhten Temperaturen, im Falle von Betondachsteinen bei Temperaturen im Bereich zwischen 40 bis 100 °C. Da Kalkausblühungen schon bei der Abbindung des Zements entstehen, ist es wichtig, die Beschichtung als Ausblühschutz schon auf dem noch nicht gehärteten Beton, der als grüner Beton bezeichnet wird, zu applizieren. Nach der Härtung bzw. Abbindung kann gegebenenfalls noch eine zweite oder weitere Beschichtungen mit einer Farbe oder einem Klarlack und jeweils anschließender Trocknung erfolgen.

Zur Beschichtung können sowohl wässrige als auch Lösungsmittel basierende Beschichtungssysteme eingesetzt werden, wobei aus ökologischen Erwägungen heute bevorzugt wässrige Systeme zum Einsatz kommen.

Verwendet man wässrige Beschichtungssysteme, die als Bindemittel typischerweise eine wässrige Polymerdispersion enthalten, zur Beschichtung von Betondachsteinen, so können durch die geeignete Wahl der Polymerdispersion die Eigenschaften dieser Beschichtungssysteme (z.B. Stabilität, Ausblühschutz, Veralgungsneigung und Anschmutzverhalten) gezielt beeinflusst werden.

Die Verwendung von Dispersionen auf Basis von (Meth)acrylsäureestern und/oder Styrol zur Herstellung von Dachsteinfarben ist schon aus DD-A124,808 bekannt.

In EP-A-492,210 wird die Verwendung ausgewählter Copolymerer abgeleitet von bestimmten Monomeren zur Reduzierung der Anschmutzneigung von Betondachsteinen beschrieben.

EP-A-383,002 offenbart Betondachsteine, die mit Farben auf Basis von Organozinncopolymer-Dispersionen beschichtet werden, und die nur eine geringe Veralgungsneigung aufweisen.

In EP-A-894,780 wird die Verwendung von strahlungshärtbaren Zubereitungen für die Beschichtung von mineralischen Formkörpem beschrieben, um unter anderem den Ausblühschutz zu verbessern, was den Nachteil eines erhöhten technischen Aufwands und erhöhter Kosten mit sich bringt.

EP-B-754,663 beschreibt eine Methode zur Herstellung von gegen Ausblüherscheinungen resistenten Beschichtungen auf zementartigen Substraten, wobei eine Beschichtung unter Verwendung eines ausgewählten Latex-Binders zusammen mit einem Schaummittel auf ein zementartiges Substrat aufgetragen wird und der entstandene Schaum anschließend kollabiert wird. Der Latex wird durch Emulsionspolymerisation hergestellt, wobei übliche nicht-ionische, anionische oder kationische Emulgatoren zum Einsatz kommen. Als Beispiele für anionische Emulgatoren werden Alkali- oder Ammonium-alkylsulfate, Alkylsulfonsäuren, Alkylphosphonsäuren, Fettsäuren und oxyethylierte Alkylphenolsulfate und -phosphate aufgezählt.

Zur Verringerung von Kalkausblühungen werden in EP-A-469,295 Beschichtung von Betonsteinen mit Filmen aus ausgewählten Copolymeren beschrieben, die ausgewählte Emulgatoren auf Basis von sulfonierten Diarylethern enthalten.

WO-A-99/48841 beschreibt die Verwendung von Carboxymethylcellulose als Schutzkolloid zur Herstellung von Dispersionen mit hinreichender Stabilität und gutem Ausblühschutz für die Beschichtung von Dachsteinen. Die Dispersionen werden durch Emulsionspolymerisation hergestellt, wobei übliche nichtionische oder ionische Emulgatoren zum Einsatz kommen. Als Beispiele für anionische Emulgatoren werden Alkali- oder Ammoniumsalze von Alkyl-, Aryl- oder Aralkylsulfonaten, -sulfaten, -phosphaten, -phosphonaten oder Verbindungen mit anderen anionischen Endgruppen aufgezählt.

In der DE-C-100 18 469 wird offenbart, dass durch Zusatz von wässrigen Styrol-Maleinsäureanhydrid Copolymerlösungen zu Dispersionen, der Ausblühschutz von entsprechenden Dispersionsdachsteinfarben verbessert wird. Die Dispersionen werden durch Emulsionspolymerisation hergestellt, wobei übliche nichtionische oder ionische Emulgatoren zum Einsatz kommen. Als Beispiele für anionische Emulgatoren werden Alkali- oder Ammoniumsalze von Alkyl-, Aryl- oder Aralkylsulfonaten, -sulfaten, -phosphaten, -phosphonaten oder Verbindungen mit anderen anionischen Endgruppen aufgezählt.

Zur Farbgebung von Betonformkörpern, insbesondere von Betondachsteinen, kann auch eine zementgebundene mineralische Beschichtungsmasse (sogenannter Zement-Slurry) verwendet werden. Diese besteht im wesentlichen aus Zement, Wasser und Pigmenten sowie gegebenenfalls aus Feinstsänden. Diese Beschichtungsmasse wird unmittelbar nach ihrer Applikation auf den Betonformkörper und vor der Aushärtung bzw. Abbindung mit einem transparenten Lack beschichtet. Der Lack hat hierbei die Aufgabe Kalkausblühungen zu verhindern und die Bewitterungsbeständigkeit zu verbessern. Der bei diesem Verfahren aufgetragene transparente Lack beeinflusst stark den Glanz des ausgehärteten Betonformkörpers.

In der DE-C-39 32 573 werden Dachsteine beschrieben, die aus einem Betonkörper und einer zweiten zementhaltigen, mineralischen Schicht, die aufgewalzt oder aufextrudiert wird, bestehen. Als Beschichtung werden in diesem Dokument bekannte Oberflächenbeschichtungen aus einer Kunststoffdispersion mit Füllstoffpigmenten und Additiven aufgebracht.

GB-A-20 30 890 beschreibt einen weiteren Betonformkörper, der aus einem Betonkörper, einer zweiten zementhaltigen, mineralischen Schicht und einer darauf aufgetragenen Beschichtung besteht. Die im Beispiel beschriebene Beschichtung enthält Quarz als Füllstoff.

Aus der DE-A-198 12 143 ist zwar bekannt, dass man phosphathaltige Emulgatoren bei der Herstellung von Dispersionen als Bindemittel für Dachsteinfarben verwenden kann. Diesem Dokument ist aber nicht zu entnehmen, dass diese Dispersionen auch zur Formulierung von Klarlacken geeignet sind. Die darin beschriebenen Dispersionen enthalten Celluloseetherderivate als Schutzkolloide. Bei solchen Dispersionen ist von einer eher breiten Partikelgrößenverteilung auszugehen, so dass der Fachmann diese eher nicht als Komponente zur Formulierung von transparenten Beschichtungen eingesetzt hätte.

Die üblicherweise zur Beschichtung von Betonformkörpern verwendeten Dachsteinfarben oder Klarlacke auf der Basis wässriger Polymerdispersionen führen zwar zu einem ausreichenden Ausblühschutz oder einer akzeptabel niedrigen Anschmutzneigung, ergeben aber bei der Beschichtung von eingefärbten zementgebundenen mineralische Beschichtungsmassen nach dem Aushärten und der Trocknung des Klarlacks nur sehr matte Oberflächen.

Ausgehend von diesem Stand der Technik liegt der vorliegenden Erfindung die Aufgabe zugrunde, einen beschichteten Betonformkörper bereitzustellen, der sich durch guten Ausblühschutz und durch verbesserten Glanz auszeichnet.

Eine weitere Aufgabe der vorliegenden Erfindung besteht im Bereitstellen eines einfachen und wirtschaftlichen Verfahrens zur Herstellung von eingefärbten Betonformkörpern mit hohem Glanz und geringer Ausblühneigung.

Es wurde nun überraschend gefunden, dass zur Farbgebung mit Zement-Slurry beschichtete Betonformkörper mit einer Beschichtung aus ausgewählten Lacken versehen werden können und dass dabei glänzende Oberflächen der ausgehärteten Betonformkörper erhalten werden.

Die vorliegende Erfindung betrifft einen Betonformkörper, der mit zementgebundener mineralischer Beschichtungsmasse (Zement-Slurry) und mit einem transparenten Lack beschichtet ist, wobei der transparente Lack als Bindemittel eine wässrige Polymerdispersion enthaltend mindestens einen anionischen Emulgator mit mindestens einer Phosphat- und/oder Phosphonatgruppe enthält.

Ferner betrifft die Erfindung ein Verfahren zur Herstellung der oben beschriebenen glänzenden Betonformkörper, wie Betondachsteine, umfassend die Maßnahmen:
a) Herstellung eines Formkörpers aus noch nicht gehärteter zementgebundener mineralischer Formmmasse,
b) Beschichtung mindestens einer Oberfläche des in Schritt a) hergestellten Formkörpers mit gegebenenfalls eingefärbter zementgebundener mineralischer Beschichtungsmasse (Zement-Slurry),
c) Beschichtung der mit Zement-Slurry versehenen Oberfläche(n) der noch nicht gehärteten zementgebundenen mineralische Formmasse mit einem transparenten wässrigen Lack enthaltend eine wässrige Polymerdispersion, die mit anionischen Emulgatoren enthaltend mindestens eine Phosphatund/oder Phosphonatgruppe stabilisiert ist, als Bindemittel, und
d) Härten des Formkörpers und der Schichten aus Zement-Slurry und transparentem Lack in an sich bekannter Weise.

Die erfindungsgemäßen glänzenden Betonformkörper besitzen zusätzlich auch einen guten Schutz gegen Kalkausblühungen und eine gute Bewitterungsbeständigkeit.

Als Betonformkörper kommen geformte Gebilde aus Beton und Gasbeton in Frage, beispielsweise Platten, Rohre und insbesondere Dachsteine. Die Betonformkörper können in an sich bekannter Weise aus fertig gemischtem Beton, beispielsweise durch Strangpressverfahren, hergestellt werden. Diese erhalten dadurch bereits ihre endgültige Form.

Zementslurrys werden üblicherweise in einem Rührgefäß aus Zement, Sand, Wasser und gegebenenfalls Pigment und gegebenenfalls weiteren Zusätzen, wie Verflüssigern oder Dispersionen, wie in EP-A-1,114,806 beschrieben, hergestellt. Die Applikation des Zementslurrys erfolgt mit an sich bekannten Verfahren. In der Regel wird der Zementslurry durch Bürsten auf den noch nicht abgebundenen Betonformkörper aufgebracht.

Der wässrige Lack wird ebenfalls nach an sich bekannten Verfahren auf den noch nicht abgebundenen und mit Zementslurry beschichteten Betonformkörper unmittelbar nach dem Aufbringen des Zementslurrys aufgetragen. Vorzugsweise erfolgt der Auftrag durch Sprühapplikation.

Der erfindungsgemäß eingesetzte wässrige Lack ist ein wässriger transparenter Lack (Klarlack). Dabei handelt es sich um einen vorzugsweise pigment- und/oder füllstofffreien Lack. Geringe Anteile von Pigmenten und/oder Füllstoffen sind möglich, sofern diese die Transparenz des Lackes nicht beeinträchtigen. Außerdem ist der Einsatz von transparenten Füllstoffen möglich.

Die auf diese Weise hergestellten Betonformkörper werden anschließend ausgehärtet. Typische Härtungstemperaturen bewegen sich im Bereich von 20 bis 100°C, vorzugsweise von 40 bis 80°C. Dabei härten sowohl der Betonformkörper als auch die Beschichtung aus Zementslurry aus. Außerdem trocknet der applizierte transparente Lack.

Die zur Herstellung der erfindungsgemäßen beschichteten Betonformkörper verwendeten Dispersionen besitzen typischerweise eine Mindestfilmbildetemperatur im Bereich von 0 bis 80 °C, bevorzugt im Bereich von 0 bis 50 °C und insbesondere im Bereich von 0 bis 30 °C und werden durch Emulsionspolymerisation unter Verwendung von anionischen Emulgatoren mit Phosphat- und/oder Phosphonatgruppen hergestellt. Es ist auch möglich, weiteren Emulgator nach der Beendigung der Polymerisation zuzusetzen.

Bevorzugt eingesetzte phosphatgruppenhaltige Emulgatoren sind Ester der Phosphorsäure mit Alkoholen und Phenolen (auch als Gemische aus Mono- Di- und Triester der Phosphorsäure), Ester der Phosphorsäure mit Addukten aus Alkoholen bzw. (Alkyl)phenolen und Ethylenoxid und/oder Propylenoxid und die Natrium-, Kalium- und Ammoniumsalze dieser Verbindungen. Derartige Verbindungen sind beispielsweise unter dem Handelsnamen ®Berol 522 (Phosphorsäurealkylester-Kaliumsalz), ® Hostaphat 1306 (Alkyloligoethoxylat-Phosphorsäureester und ® Berol 733 (Alkylphenololigoethoxylatphosphat-Kaliumsatz) kommerziell erhältlich.

Als phosphatgruppenhaltige Emulgatoren können auch ethylenisch ungesättigte Ester der Phosphorsäure mit Kohlenwasserstoffen und die hiervon abgeleiteten Neutralisationsprodukte mit Basen als copolymerisierbare Emulgatoren eingesetzt werden. Selbstverständlich können auch Mischungen der vorgenannte Emulgatoren eingesetzt werden.

Besonders eignen sich als anionische Emulgatoren mit Phosphat - und/oder Phosphonatgruppen copolymerisierbare modifizierte Alkoholetherphosphate, wie Maxemul® 6106, 6112 und 6120 der Fa. Unichema, die Alkali- oder Animoniumsalze linearer C₈ - C₁₂ Alkylphosphonsäuren (Hostaphat OPS, Clariant), Alkali- oder Ammoniumsalze von linearen und verzweigten C₁₀ - C₁₈ Alkylpolyglykolether-phosphorsäureestern (Hostaphat K, Clariant), Alkylarylpolyglykoletherphosphate (Berol 733) sowie die Alkali- oder Ammoniumsalze linearer oder verzweigter C₁₀ -C₁₈ Alkylphosphorsäuremono- und diester (Hostaphat C, Clariant, Berol 521 und 522) sowie alle Mischungen der vorgenannten Emulgatoren.

Die zuletzt genannte Gruppe von Emulgatoren wird erfindungsgemäß bevorzugt eingesetzt.

Ebenfalls bevorzugt eingesetzt werden Monoester der Phosphorsäure.

Die wässrige Polymerdispersion sollte 0,2 - 5 Gew. %, bevorzugt 0,4 - 3 Gew. %, und besonders bevorzugt 0,5 - 2 Gew. % der erfindungsgemäß eingesetzten phosphorhaltigen Verbindungen, bezogen auf die Menge an Polymer in der Dispersion, als anionische Emulgatoren enthalten.

Darüber hinaus kann die Dispersion noch andere nichtionische oder zusätzliche anionische Emulgatoren enthalten.

Als nichtionische Emulgatoren verwendet man beispielsweise Alkylpolyglykolether wie Ethoxylierungsprodukte von Lauryl-, Oleyl- oder Stearylalkohol oder von Gemischen wie Kokosfettalkohol; Alkylphenolpolyglykolether, wie Ethoxylierungsprodukte von Octyl- oder Nonylphenol, Diisopropylphenol, Triisopropylphenol oder von Di- oder Tri.-tert.-butylphenol; oder Ethoxylierungsprodukte von Polypropylenoxid.

Als zusätzliche anionische Emulgatoren können die Alkali- oder Ammoniumsalze von Alkyl-, Aryl- oder Alkylarylsulfonaten und -sulfaten, wobei sich auch Oligo- oder Polyethylenoxid-Einheiten zwischen dem Kohlenwasserstoffrest und der anionischen Gruppe befinden können, mitverwendet werden. Typische Beispiele sind Natriumlaurylsulfat, Natriumundecylglykolethersulfat, Natriumlauryldiglykolsulfat, Natriumtetradecyltriglykolsulfat, Natriumoctylphenolglykolethersulfat, Natriumdodecylbenzolsulfonat, Natriumlauryldiglykolsulfat, Ammonium-tri-tert.butylphenolpenta- oder oktaglykolsulfat. Auch ist die Mitverwendung von sulfonierten Diarylethern gemäß Formel I der EP-A-469,295 möglich.

Bevorzugt eingesetzt werden Mischungen von anionische Emulgatoren, wobei mindestens ein Emulgator mit einer Phosphat - und/oder Phosphonatgruppe mit einem weiteren Emulgator, der als anionische Gruppe eine Sulfat- oder Sulfonatgruppe enthält, kombiniert wird.

Besonders bevorzugt werden Mischungen von Emulgatoren mit mindestens 10 Gew. % eines Emulgators mit Phosphat und/oder Phosphonatgruppen, bezogen auf die Gesamtmenge an eingesetztem Emulgator.

Zur Stabilisierung der erfindungsgemäß eingesetzten wässrigen Polymerdispersionen können auch zusätzlich Schutzkolloide eingesetzt werden, sofern die Teilchendurchmesser der Polymerdispersion dadurch nicht wesentlich vergrößert werden. Typische mittlere Teilchendurchmesser (D₅₀ Werte) der erfindungsgemäß eingesetzten Polymerdispersionen bewegen sich im Bereich von kleiner gleich 200 nm, vorzugsweise kleiner gleich 150 nm.

Geeignete Schutzkolloide sind die dem Fachmann bekannten und üblicherweise eingesetzten Polyvinylalkohole, Celluloseetherderivate, wie z.B. in WO-A-99/48,841 beschrieben, sowie auf Polyvinylpyrrolidon basierende Copolymerisate.

Die zur Herstellung der erfindungsgemäßen Betonformkörper eingesetzten wässrigen Polymerdispersionen werden durch Emulsionspolymerisation von radikalisch polymerisierbaren ethylenisch ungesättigten Monomeren, vorzugsweise von Gemischen derartiger Monomerer erhalten.

Vorzugsweise handelt es sich dabei um Monomermischungen enthaltend Acrylate und/oder Methacrylate und/oder Vinylaromaten als Hauptmonomere, insbesondere um Monomermischungen mit folgender Zusammensetzung:
i) 85 bis 99,8 Gew. % Acrylsäureester mit C₁ bis C₁₂ Alkanolen, Methacrylsäureester mit C₁ bis C₁₂ Alkanolen und / oder vinylaromatischer Monomeren,
ii) 0,2 bis 5 Gew. % stabilisierende Monomere, wie copolymerisierbare Carbonsäuren, copolymerisierbare Carbonsäureamide, copolymerisierbare Phosphate und/oder Phosphonate, copolymerisierbare Sulfate und/oder copolymerisierbare Sulfonsäuren und deren Salze, und
iii) 0 bis 10 Gew. % sonstige Monomere.

Als Monomeren i) werden Acryl- und Methacrylsäureester von C₁ bis C₁₂ Monoalkoholen wie z.B. Ethylacrylat, Butylacrylat, n-Octylacrylat, 2-Ethylhexylacrylat, Methylmethacrylat, Butylmethacrylat, Cyclohexylmethacrylat, Isobornylmethacrylat, und/oder vinylaromatische Monomere wie z.B. Styrol oder Vinyltoluol verwendet.

Vorzugsweise werden solche dem Fachmann bekannte Kombinationen von weichmachenden Monomeren, wie z.B. Butylacrylat und 2-Ethylhexylacrylat mit hartmachenden. Monomeren, wie z. B. Methylmethacrylat, Cyclohexylmethacrylat und Styrol, verwendet, so dass die Mindestfilmbildetemperatur (MFT) der entsprechenden Dispersion im Bereich von 0 bis 80°C, vorzugsweise von 0 bis 50 °C, insbesondere im Bereich von 0 bis 30 °C und ganz besonders bevorzugt im Bereich von 0 bis 20 °C liegt.

Wird nach dem Verfahren der Mehrstufenemulsionspolymerisation gearbeitet, so werden die hartmachenden und weichmachenden Monomere und das Masseverhältnis der einzelnen Polymerisationsstufen vorzugsweise so kombiniert, dass die Dispersion eine Mindestfilmbildetemperatur im Bereich 0 bis 80°C, vorzugsweise von von 0 bis 50 °C besitzt und die entsprechenden Dispersionsfilme bei-einer Filmdicke von 100 µm eine Reißdehnung von >100% besitzen.

Als stabilisierende Monomeren ii) werden copolymerisierbare Carbonsäuren und Carbonsäureamide, wie Acrylsäure, Methacrylsäure, Itaconsäure, Acrylamid, und Methacrylamid verwendet und / oder copolymerisierbare Sulfate und/oder copolymerisierbare Sulfonate, wie Natriumethensulfonat, Sulfoalkyl(meth)acrylate z.B. Kaliumsalz von Sulfopropylmethacrylat (=SPM® der Firma Raschig), Sulfoalkyl(meth)acrylamide, z.B. das Natriumsalz der Acrylamido-2-methylpropansulfonsäure (= AMPS® der Firma Lubrizol).

Außerdem können als Monomere ii) mit radikalisch polymerisierbaren Gruppen modifizierte Phosphate und/oder Phosphonate eingesetzt werden. Beispiele dafür sind Vinylphosphonat oder die oben erwähnten mit Phosphat- und/oder Phosphonatgruppen copolymerisierbar modifizierten Alkoholetherphosphate.

Als sonstige Monomeren iii) können ketogruppenhaltige Monomere, wie Acetoacetoxygruppen-haltige Monomere z.B. Acetoacetoxyethylmethacrylat, Acetoacetoxybutylmethacrylat, Acrylamidomethylacetylaceton und Acetessigsäurevinylester und polymerisierbare Derivate des Diacetons, wie Diacetonacrylamid und Diacetonmethacrylamid verwendet werden.

Des weiteren können als Monomere iii) Hydroxyalkyl(meth)acrylate, Glycidyl-(meth)acrylate, Alkoxyvinylsilane, (Meth)acryloyloxyalkylsilane, (Meth)acryloyloxyalkylphospate, und polymerisierbare Ethylenharnstoffderivate, wie N-(β-(Meth)acryloxyethyl)-N,N'-ethylenharnstoff und N-(β-Acrylamidoethyl)-N, N'ethylenharnstoff verwendet werden.

Zur Verbesserung des Anschmutzverhaltens können Dispersionen, die als sonstige Monomere iii) ketogruppenhaltige Monomere enthalten, mit polyfunktionellen Carbonsäurehydraziden versetzt werden, die mindestens zwei Hydrazidgruppen, wie beispielsweise Adipinsäuredihydrazid, Oxalsäuredihydrazid, Isophthalsäuredihydrazid und Polyacrylsäurepolyhydrazid, enthalten.

Vorzugsweise wird ein äquimolares Verhältnis an Hydrazidgruppen zu Ketogruppen verwendet.

Die Polymerisation der bei dem erfindungsgemäßen Verfahren verwendeten wässrigen Polymerdispersionen wird nach den gängigen Verfahren der Emulsionspolymerisation durchgeführt, in dem die Monomeren in wässriger Phase in Gegenwart von Emulgatoren, Initiatoren und/oder des Schutzkolloids emulgiert und bei Temperaturen von typischerweise 50 bis 95 °C polymerisiert werden.

Die Emulsionspolymerisation kann nach den gängigen, dem Fachmann bekannten Verfahren, wie Batch-, Monomerendosier- oder Emulsionszulaufverfahren durchgeführt werden.

Vorzugsweise wird nach dem Emulsionszulaufverfahren gearbeitet, bei dem eine kleine Menge der Monomeren vorpolymerisiert wird und anschließend die verbleibende Menge an Monomeren in Form einer wässrigen Emulsion zudosiert wird.

Gegebenfalls können auch mehrere verschiedene Monomeremulsionen nacheinander zudosiert werden.

Zum Starten und Weiterführen der Polymerisation bedient man sich öl- und/oder vorzugsweise wasserlöslicher Radikalbildner oder Redoxsysteme. Es eignen sich z.B. Wasserstoffperoxid, Kalium-, Natrium- oder Ammonium-peroxodisulfat, Dibenzoylperoxid, Laurylperoxid, tert.-Butylhydroperoxid, Bisazodiisobutyronitril, allein oder zusammen mit reduzierenden Komponenten, z.B. mit Natriumbisulfit, den Salzen der Hydroxymethansulfinsäure, Glucose, Ascorbinsäure und andere reduzierend wirkenden Verbindungen.

Bevorzugt werden Peroxodisulfate verwendet.

Desweiteren können Regler, wie Mercaptane, insbesondere N-Dodecylmercaptan, Thiophenol und 2-Methyl-5-tert. butylthiophenol, verwendet werden.

Üblicherweise werden Mengen von 0 bis 1 Gew. %, bevorzugt von 0 bis 0,5 Gew. % eingesetzt und besonders bevorzugt wird die Dispersion ohne Verwendung eines Reglers hergestellt.

Die wässrigen Polymerdispersionen werden üblicherweise mit wässrigen Ammoniak-, Alkali- und Erdalkalihydroxyd-Lösungen auf einen pH-Wert von 6,5 bis 10, vorzugsweise von 7,0 bis 9,0 eingestellt. Weiterhin ist die Verwendung eines Puffers, wie Natriumhydrogenphosphat, Natriumacetat und Natriumhydrogencarbonat möglich, welcher gegebenenfalls schon während der Emulsionspolymerisation eingesetzt wird.

Die zur Herstellung der erfindungsgemäßen Betonformkörper als transparenter Lack verwendeten wässrigen Polymerdispersionen enthalten vorzugsweise weitere Additive und Bestandteile, wie sie bei der Formulierung von wässrigen Dispersionslacken üblich sind. Als Additive und weitere Bestandteile können Filmbildehilfsmittel, wie Testbenzin, Texanol®, TxiB®, Butylglykol, Butyldiglykol, Butyldipropylenglykol und Butyltripropylenglykol; Weichmacher, wie Dimethylphthalat, Disobutylphthalat, Adipinsäurediisobutylester, Coasol B® und Plastilit 3060®; Netzmittel wie AMP 90®, TegoWet.280®, Fluowet PE®; Verdicker auf Basis von Polyacrylaten oder Polyurethanen, wie Borchigel L75® und Tafigel PUR 60®; Konservierungsmittel, Entschäumer, z.B. Mineralöl- oder Silikonentschäumer; UV-Schutzmittel wie Tinnuvin 1130®, Dispergiermittel, wie Polyacrylsäuren (z.B. Lopon 890®) oder Styrol-Maleinsäureanhydrid Copolymere, wie z.B. in der DE-C-100 184 69 beschrieben, oder andere Additive und Hilfsmittel, wie sie zur Formulierung von Beschichtungsmassen üblich sind verwendet werden.

Die erfindungsgemäßen Betonformkörper können als Baustoffe eingesetzt werden, insbesondere in Form von Platten oder Rohren und ganz besonders bevorzugt als Dachsteine.

Diese Verwendungen sind ebenfalls Gegenstand der vorliegenden Erfindung.

Die nachstehenden Beispiele erläutern die Erfindung ohne diese zu begrenzen.

### Beispiele

### A) Herstellung von erfindungsgemäßen wässrigen Polymerisatdispersionen

### Beispiel 1:

Emulgatorlösung 1: 28 Gew. % ige wässrige Lösung des Kaliumsatzes eines C₁₀-Alkyl-Phosphorsäureesters.

In einen Polymerisationsreaktor wurden 475 g deionisiertes Wasser und 25 g der Ernulgatorlösung 1 vorgelegt und unter Rühren auf 80 °C erhitzt (Vorlage).

In einem Zulaufgefäß wurde eine Monomeremulsion aus folgenden Komponenten unter Rühren hergestellt (Zulauf 1):

| Menge | Komponente |
|---|---|
| 645,00 g | Deionisiertes Wasser |
| 2,89 g | Natriumhydroxid |
| 15,00 g | 2-Acrylamido-2-methyl-propansulfonsäure |
| 2,50 g | Ammoniumpersulfat |
| 17,86 g | Emulgatorlösung 1 |
| 500,00 g | Methylmethacrylat |
| 500,00 g | Butylacrylat |

Zu einem weiteren Zulaufgefäß wurde eine wässrige Initiatorlösung aus folgenden Komponenten hergestellt (Zulauf 2):

| Menge | Komponente |
|---|---|
| 13,33 g | Deionisiertes Wasser |
| 0,50 g | Ammoniumpersulfat |

Zu der im Polymerisationsreaktor auf 80 °C erhitzten Vorlage wurden nacheinander und in jeweils einer Portion 60,00 g des Zulaufs 1 und der gesamte Zulauf 2 zugegeben und für 15 Minuten bei 80 °C polymerisiert. Anschließend wurde die verbliebene Restmenge des Zulaufs 1 bei konstant 80 °C innerhalb von 180 Minuten kontinuierlich in den Reaktor dosiert. Abschließend wurde 60 Minuten bei 80 °C nachpolymerisiert und auf 25 °C abgekühlt.

Der Festkörpergehalt der erhaltenen Polymerdispersion lag bei 47,0 %.

### Beispiel 2:

Emulgatorlösung 1: 28 Gew. %ige wässrige Lösung des Kaliumsalzes eines C₁₀-Alkyl-Phosphorsäureesters.

Emulgatorlösung 2: 28 Gew. %ige wässrige Lösung des Natriumsalzes eines Schwefelsäurehalbesters eines ethoxylierten C₁₁-Alkohols, mittlerer Ethoxylierungsgrad ca. 7.

In einen Polymerisationsreaktor wurden 475 g deionisiertes Wasser und 16,43 g der Emulgatorlösung 1 sowie 8,21 g der Emulgatorlösung 2 vorgelegt und unter Rühren auf 80 °C erhitzt (Vorlage).

In einem Zulaufgefäß wurde eine Monomeremulsion aus folgenden Komponenten unter Rühren hergestellt (Zulauf 1):

| Menge | Komponente |
|---|---|
| 644,00 g | Deionisiertes Wasser |
| 2,89 g | Natriumhydroxid |
| 15,00 g | 2-Acrylamido-2-methyl-propansulfonsäure |
| 2,50 g | Ammoniumpersulfat |
| 14,29 g | Emulgatorlösung 1 |
| 7,14 g | Emulgatorlösung 2 |
| 500,00 g | Methylmethacrylat |
| 500,00 g | Butylacrylat |

In einem weiteren Zulaufgefäß wurde eine wässrige Initiatorlösung aus folgenden Komponenten hergestellt (Zulauf 2):

| Menge | Komponente |
|---|---|
| 13,33 g | Deionisiertes Wasser |
| 0,50 g | Ammoniumpersulfat |

Reaktionsführung wie in Beispiel 1.

Der Festkörpergehalt der erhaltenen wässrigen Polymerdispersion lag bei 47,0 %.

### Beispiel 3:

Emulgatorlösung 1 und Emulgatorlösung 2: wie Beispiel 2.

In einem Polymerisationsreaktor wurden 475 g deionisiertes Wasser und 12,50 g der Emulgatorlösung 1 sowie 12,50 g der Emulgatorlösung 2 vorgelegt und unter Rühren auf 80°C erhitzt (Vorlage).

In einem Zulaufgefäß wurde eineMonomeremulsion aus folgenden Komponenten unter Rühren hergestellt (Zulauf 1):

| Menge | Komponente |
|---|---|
| 643,00 g | Deionisiertes Wasser |
| 2,89 g | Natriumhydroxid |
| 15,00 g | 2-Acrylamido-2-methyl-propansulfonsäure |
| 2,50 g | Ammoniumpersulfat |
| 8,93 g | Emulgatorlösung 1 |
| 12,50 g | Emulgatorlösung 2 |
| 500,00 g | Methylmethacrylat |
| 500,00 g | Butylacrylat |

In einem weiteren Zulaufgefäß wurde eine wässrige Initiatorlösung aus folgenden Komponenten hergestellt (Zulauf 2):

| Menge | Komponente |
|---|---|
| 13,33 g | Deionisiertes Wasser |
| 0,50 g | Ammoniumpersulfat |

Reaktionsführung wie in Beispiel 1.

Der Festkörpergehalt der erhaltenen wässrigen Polymerdispersion lag bei 47,0 %.

### Beispiel 4:

Emulgatorlösung 1 und Emulgatorlösung 2: wie Beispiel 2.

In einem Polymerisationsreaktor wurden 475 g deionisiertes Wasser und 8,21 g der Emulgatorlösung 1 sowie 16,43 g der Emulgatorlösung 2 vorgelegt und unter Rühren auf 80 °C erhitzt (Vorlage).

In einem Zulaufgefäß wurde eineMonomeremulsion aus folgenden Komponenten unter Rühren hergestellt (Zulauf 1):

| Menge | Komponente |
|---|---|
| 644,00 g | Deionisiertes Wasser |
| 2,89 g | Natriumhydroxid |
| 15,00 g | 2-Acrylamido-2-methyl-propansulfonsäure |
| 2,50 g | Ammoniumpersulfat |
| 7,14 g | Emulgatorlösung 1 |
| 14,29 g | Emulgatorlösung 2 |
| 500,00 g | Methylmethacrylat |
| 500,00 g | Butylacrylat |

In einem weiteren Zulaufgefäß wurde eine wässrige Initiatorlösung aus folgenden Komponenten hergestellt (Zulauf 2):

| Menge | Komponente |
|---|---|
| 13,33 g | Deionisiertes Wasser |
| 0,50 g | Ammoniumpersulfat |

Reaktionsführung wie in Beispiel 1.
Der Festkörpergehalt der erhaltenen wässrigen Polymerdispersion lag bei 47,0 %.

### B) Herstellung einer wässrigen Vergleichsdispersion

Emulgatorlösung 2: 28 Gew.-%tige wässrige Lösung des Natriumsalzes eines Schwefelsäurehalbesters eines ethoxylierten C₁₁-Alkohols, mittlerer Ethoxylierungsgrad ca. 7.

In einen Polymerisationsreaktor wurden 475 g deionisiertes Wasser und 25 g der Emulgatorlösung 2 vorgelegt und unter Rühren auf 80 °C erhitzt (Vorlage).

In einem Zulaufgefäß wurde eine Monomeremulsion aus folgenden Komponenten unter Rühren hergestellt (Zulauf 1):

| Menge | Komponente |
|---|---|
| 645,00 g | Deionisiertes Wasser |
| 2,89 g | Natriumhydroxid |
| 15,00 g | 2-Acrylamido-2-methyl-propansulfonsäure |
| 2,50 g | Ammoniumpersulfat |
| 17,86 g | Emulgatorlösung 2 |
| 500,00 g | Methylmethacrylat |
| 500,00 g | Butylacrylat |

In einem weiteren Zulaufgefäß wurde eine wässrige Initiatorlösung aus folgenden Komponenten hergestellt (Zulauf 2):

| Menge | Komponente |
|---|---|
| 13,33 g | Deionisiertes Wasser |
| 0,50 g | Ammoniumpersulfat |

Zu der im Polymerisationsreaktor auf 80 °C erhitzten Vorlage wurden nacheinander und in jeweils einer Portion 60,00 g des Zulaufs 1 und der gesamte Zulauf 2 zugegeben und für 15 Minuten bei 80 °C polymerisiert. Anschließend wurde die verbliebene Restmenge des Zulaufs 1 bei konstant 80 °C innerhalb von 180 Minuten kontinuierlich in den Reaktor dosiert. Abschließend wurde 60 Minuten bei 80°C nachpolymerisiert und auf 25°C. abgekühlt.

Der Festkörpergehalt der erhaltenen wässrigen Polymerdispersion lag bei 47,0 %.

### C) Herstellung der Klarlacke

Die wässrigen Polymerdispersionen aus Beispiel 1-5 wurden vor Verwendung als Klarlack wie folgt mit Additiven und einem Filmbildehilfsmittel modifiziert:
Jeweils 100 GT der Dispersion gemäß Beispiel 1- 5 wurden unter Rühren mit einer Mischung bestehend aus 3,5 GT Butyldiglykol und 2 GT Wasser versetzt.
Anschließend wurde in die so erhaltende Mischung 0,1 GT des Silikonentschäumers Tego Foamex 825 eingerührt. Durch diese Vorgehensweise wurden die verwendeten Klarlacke K 1 bis K 5 gemäß der nachstehenden Tabelle erhalten:

| Klarlack | Verwendete Dispersion gemäß |
|---|---|
| K 1 | Beispiel 1 |
| K 2 | Beispiel 2 |
| K 3 | Beispiel 3 |
| K 4 | Beispiel 4 |
| Vergleichsklarlack K 5 | Vergleichsbeispiel 5 |

### D) Herstellung der Probekörper

Die Klarlacke K 1 bis K 5 gemäß C werden auf einen eingefärbten zementhaltigen Slurry appliziert, der wie folgt zusammengesetzt ist:

| Menge | Komponente |
|---|---|
| 25 GT | Wasser |
| 30 GT | Quarzsand F 35® (Quarzwerke Frechen, max. |
| | Korngröße 0.355 mm) |
| 50 GT | Zement CEM 142,5 |
| 1 GT | Bayferrox 960® |

Zur Herstellung des eingefärbten zementhaltigen Slurrys wird Wasser vorgelegt und anschließend mit Hilfe eines Mörtelrührers, die festen und bereits vorgemischten Bestandteile während 5 Minuten eingerührt. Der auf diese Weise hergestellte Slurry wird dann auf eine vorher gewässerte Eterplanplatte jeweils mit einer Schichtdicke von 1 mm und einer Fläche von 20*20 cm² aufgebracht. Direkt anschließend werden die so hergestellten Probekörper mit den unter C beschriebenen Klarlacken K 1 bis K 5 durch Spritzapplikation beschichtet. Dabei werden jeweils 3 g des Klarlacks auf die noch nassen nicht ausgehärteten Probekörper appliziert (25 g/m²) und dann bei 40 °C und 95 % Luftfeuchte im Trockenschrank über 16h getrocknet.

### E) Glanzmessungen

Die Messung des Glanzgrades der Oberfläche der unter D hergestellten Probekörper liefert in Abhängigkeit des vorwendeten Klarlacks folgendes Ergebnis:

| Verwendeter wässriger Klarlack gemäß C | Glanzgrad (Meßwinkel 60°) |
|---|---|
| K 1 | 6,1 |
| K 2 | 1,7 |
| K 3 | 1,6 |
| K 4 | 1,2 |
| Vergleichsbeispiel K 5 | 0,6 |

## Patentansprüche

1. Betonformkörper, der mit zementgebundener mineralischer Beschichtungsmasse (Zement-Slurry) und mit einem transparenten Lack beschichtet ist, wobei der transparente Lack als Bindemittel eine wässrige Polymerdispersion enthaltend mindestens einen anionischen Emulgator mit mindestens einer Phosphat- und/oder Phosphonatgruppe enthält.

2. Betonformkörper nach Anspruch 1, **dadurch gekennzeichnet, dass** der anionische Emulgator ausgewählt wird aus der Gruppe bestehend aus Estern der Phosphorsäure mit Alkoholen und Phenolen (auch als Gemische aus Mono- Di- und Triester der Phosphorsäure), Estern der Phosphorsäure mit Addukten aus Alkoholen bzw. (Alkyl)phenolen und Ethylenoxid und/oder Propylenoxid, den Natrium-, Kalium- und Ammoniumsalzen dieser Verbindungen, insbesondere den ethylenisch ungesättigten Estern der Phosphorsäure mit Kohlenwasserstoffen und den hiervon abgeleiteten Neutralisationsprodukten mit Basen sowie Mischungen der vorgenannte Emulgatoren.

3. Betonformkörper nach Anspruch 2, **dadurch gekennzeichnet, dass** der anionische Emulgator ausgewählt wird aus der Gruppe bestehend aus mit Phosphat- und/oder Phosphonatgruppen copolymerisierbare modifizierten Alkoholetherphosphaten, Alkali- oder Animoniumsalzen linearer C₈ - C₁₂ Alkylphosphonsäuren, Alkali- oder Ammoniumsalzen von linearen und verzweigten C₁₀ - C₁₈ Alkylpolyglykolether-phosphorsäureestern, Alkylarylpolyglykoletherphosphaten sowie den Alkali- oder Ammoniumsalzen linearer oder verzweigter C₁₀ -C₁₈ Alkylphosphorsäuremono- und -diestern sowie Mischungen der vorgenannten Emulgatoren.

4. Betonformkörper nach Anspruch 1, **dadurch gekennzeichnet, dass** neben dem anionischen Emulgator mit mindestens einer Phosphat- und/oder Phosphonatgruppe ein weiterer anionischer Emulgator mit mindestens einer Sulfat- oder Sulfonatgruppe kombiniert vorliegt.

5. Betonformkörper nach Anspruch 1, **dadurch gekennzeichnet, dass** die wässrige Polymerdispersion ein Emulsionspolymerisat enthält das sich ableitet von einer Monomermischung mit folgender Zusammensetzung:
i) 85 bis 99,8 Gew. % Acrylsäureester mit C₁ bis C₁₂ Alkanolen, Methacrylsäureester mit C₁ bis C₁₂ Alkanolen und / oder vinylaromatischer Monomeren,
ii) 0,2 bis 5 Gew. % copolymerisierbare Carbonsäuren, copolymerisierbare Carbonsäureamide, copolymerisierbare Phosphate und/oder Phosphonate, copolymerisierbare Sulfate und/oder copolymerisierbare Sulfonsäuren und deren Salze als stabilisierende Monomere, und
iii) 0 bis 10 Gew. % sonstige Monomere.

6. Betonformkörper nach Anspruch 5, **dadurch gekennzeichnet, dass** die Monomeren i) Acryl- und Methacrylsäureester von C₁ bis C₁₂ Monoalkoholen und/oder vinylaromatische Monomere sind, insbesondere Kombinationen von Butylacrylat und 2-Ethylhexylacrylat mit Methylmethacrylat, Cyclohexylmethacrylat und Styrol.

7. Betonformkörper nach Anspruch 5, **dadurch gekennzeichnet, dass** die Monomeren ii) ausgewählt werden aus der Gruppe bestehend aus Acrylsäure, Methacrylsäure, Itaconsäure, Acrylamid, Methacrylamid, Natriumethensulfonat, Sulfoalkyl(meth)acrylaten, Sulfoalkyl(meth)acrylamiden und deren Gemischen.

8. Betonformkörper nach Anspruch 5, **dadurch gekennzeichnet, dass** die Monomeren iii) ketogruppenhaltige Monomere sind, vorzugsweise Acetoacetoxygruppenhaltige Monomere, insbesondere Acetoacetoxyethylmethacrylat, Acetoacetoxybutylmethacrylat, Acrylamidomethylacetylaceton und Acetessigsäurevinylester, und polymerisierbare Derivate des Diacetons, insbesondere Diacetonacrylamid und Diacetonmethacrylamid.

9. Betonformkörper nach Anspruch 5, **dadurch gekennzeichnet, dass** die Monomeren iii) ausgewählt werden aus der Gruppe bestehend aus Hydroxyalkyl(meth)acrylaten, Glycidyl-(meth)acrylaten, Alkoxyvinylsilanen, (Meth)acryloyloxyalkylsilanen, (Meth)acryloyloxyalkylphospaten, und polymerisierbaren Ethylenharnstoffderivaten und deren Kombinationen.

10. Betonformkörper nach Anspruch 8, **dadurch gekennzeichnet, dass** die ketogruppenhaltigen Monomeren mit polyfunktionellen Carbonsäurehydraziden versetzt werden, die mindestens zwei Hydrazidgruppen enthalten.

11. Verfahren zur Herstellung der Betonformkörper nach Anspruch 1 umfassend die Maßnahmen:
a) Herstellung eines Formkörpers aus noch nicht gehärteter zementgebundener mineralischer Formmmasse,
b) Beschichtung mindestens einer Oberfläche des in Schritt a) hergestellten Formkörpers mit eingefärbter zementgebundener mineralischer Beschichtungsmasse (Zement-Slurry),
c) Beschichtung der mit Zement-Slurry versehenen Oberfläche(n) der noch nicht gehärteten zementgebundenen mineralische Formmasse mit einem transparenten Lack enthaltend eine wässrige Polymerdispersion, die mit anionischen Emulgatoren enthaltend mindestens eine Phosphat- und/oder Phosphonatgruppe stabilisiert ist, als Bindemittel, und
d) Härten des Formkörpers und der Schichten aus Zement-Slurry und transparentem Lack in an sich bekannter Weise.

12. Verfahren nach Anspruch 11, **dadurch gekennzeichnet, dass** die wässrigen Polymerdispersionen eine Mindestfilmbildetemperatur im Bereich von 0 bis 80 °C besitzen und durch Emulsionspolymerisation unter Verwendung von anionischen Emulgatoren mit mindestens einer Phosphat- und/oder Phosphonatgruppe hergestellt worden sind.

13. Verwendung der Betonformkörper nach Anspruch 1 als Baustoffe, insbesondere in der Form von Platten oder Rohren oder als Dachsteine.

## Claims

1. A concrete molding coated with cement-bound mineral coating composition (cement slurry) and with a transparent varnish, the transparent varnish comprising as binder an aqueous polymer dispersion comprising at least one anionic emulsifier containing at least one phosphate and/or phosphonate group.

2. The concrete molding as claimed in claim 1, wherein the anionic emulsifier is selected from the group consisting of esters of phosphoric acid with alcohols and phenols (also in the form of mixtures of mono-, di- and triesters of phosphoric acid), esters of phosphoric acid with adducts of alcohols and/or (alkyl)phenols and ethylene oxide and/or propylene oxide, the sodium, potassium and ammonium salts of these compounds, in particular the ethylenically unsaturated esters of phosphoric acid with hydrocarbons and the neutralization products derived therefrom, with bases, and also mixtures of the aforementioned emulsifiers.

3. The concrete molding as claimed in claim 2, wherein the anionic emulsifier is selected from the group consisting of modified alcohol ether phosphates copolymerizable with phosphate and/or phosphonate groups, alkali metal or ammonium salts of linear C₈ - C₁₂ alkylphosphonic acids, alkali metal or ammonium salts of linear and branched C₁₀ - C₁₈ alkyl polyglycol ether phosphates, alkylaryl polyglycol ether phosphates and also the alkali metal or ammonium salts of linear or branched C₁₀-C₁₈ alkylphosphoric monoesters and diesters, and also mixtures of the aforementioned emulsifiers.

4. The concrete molding as claimed in claim 1, wherein in addition to the anionic emulsifier containing at least one phosphate and/or phosphonate group there is, in combination, a further anionic emulsifier containing at least one sulfate or sulfonate group.

5. The concrete molding as claimed in claim 1, wherein the aqueous polymer dispersion comprises an emulsion polymer derived from a monomer mixture having the following composition:
i) from 85 to 99.8% by weight of acrylic esters with C₁ to C₁₂ alkanols, methacrylic esters with C₁ to C₁₂ alkanols and/or vinylaromatic monomers,
ii) from 0.2 to 5% by weight of stabilizing monomers, such as copolymerizable carboxylic acids, copolymerizable carboxamides, copolymerizable phosphates and/or phosphonates, copolymerizable sulfates and/or copolymerizable sulfuric acids and salts thereof, and
iii) from 0 to 10% by weight of other monomers.

6. The concrete molding as claimed in claim 5, wherein the monomers i) are acrylic and methacrylic esters of C₁ to C₁₂ monoalcohols and/or vinylaromatic monomers, particularly combinations of butyl acrylate and 2-ethylhexyl acrylate with methyl methacrylate, cyclohexyl methacrylate and styrene.

7. The concrete molding as claimed in claim 5, wherein the monomers ii) are selected from the group consisting of acrylic acid, methacrylic acid, itaconic acid, acrylamide, methacrylamide, sodium ethenesulfonate, sulfoalkyl (meth)acrylates, sulfoalkyl(meth)acrylamides and mixtures thereof.

8. The concrete molding as claimed in claim 5, wherein the monomers iii) are monomers containing keto groups, preferably acetoacetoxy-containing monomers, particularly acetoacetoxyethyl methacrylate, acetoacetoxybutyl methacrylate, acrylamidomethylacetylacetone and vinyl acetoacetate, and polymerizable derivatives of diacetone, particularly diacetoneacrylamide and diacetonemethacrylamide.

9. The concrete molding as claimed in claim 5, wherein the monomers iii) are selected from the group consisting of hydroxyalkyl (meth)acrylates, glycidyl (meth)acrylates, alkoxyvinylsilanes, (meth)acryloyloxyalkylsilanes, (meth)acryloyloxyalkyl phosphates, and polymerizable ethyleneurea derivatives and combinations thereof.

10. The concrete molding as claimed in claim 8, wherein the monomers containing keto groups are admixed with polyfunctional carboxylic hydrazides containing at least two hydrazide groups.

11. A process for producing a concrete molding as claimed in claim 1, which comprises
a) producing a molding from as yet uncured cement-bound mineral molding compound,
b) coating at least one surface of the molding produced in step a) with colored cement-bound mineral coating composition (cement slurry),
c) coating the cement-slurry-coated surface(s) of the as yet uncured cement-bound mineral molding compound with a transparent varnish comprising an aqueous polymer dispersion binder stabilized with anionic emulsifiers containing at least one phosphate and/or phosphonate group, and
d) curing the molding and the coats of cement slurry and transparent varnish in conventional manner.

12. The process as claimed in claim 11, wherein the aqueous polymer dispersions possess a minimum film formation temperature in the range from 0 to 80°C and have been prepared by emulsion polymerization using anionic emulsifiers containing at least one phosphate and/or phosphonate group.

13. The use of concrete molding as claimed in claim 1 as a building material, in particular in the form of a slab or pipe or as a rooftile.

## Revendications

1. Objet moulé en béton, qui est revêtu d'une masse de revêtement minérale liée à du ciment (coulis de ciment) et d'un vernis transparent, le vernis transparent contenant, en tant que liant, une dispersion aqueuse de polymères contenant au moins un émulsifiant anionique comportant au moins un groupe phosphate et/ou phosphonate.

2. Objet moulé en béton selon la revendication 1, **caractérisé en ce que** l'émulsifiant anionique est choisi dans le groupe consistant en les esters de l'acide phosphorique et d'alcools et de phénols (se présentant aussi sous forme de mélanges de mono-, di- et triesters de l'acide phosphorique), les esters de l'acide phosphorique et d'adduits d'alcools ou d'(alkyl)phénols et d'oxyde d'éthylène et/ou d'oxyde de propylène, les sels de sodium, de potassium et d'ammonium de ces composés, en particulier les esters à insaturation éthylénique de l'acide phosphorique et d'hydrocarbures, et les produits de neutralisation, qui en dérivent, avec des bases, ainsi que les mélanges des émulsifiants mentionnés ci-dessus.

3. Objet moulé en béton selon la revendication 2, **caractérisé en ce que** l'émulsifiant anionique est choisi dans le groupe consistant en les alcoolétherphosphates modifiés, copolymérisables avec des groupes phosphate et/ou phosphonate, les sels de métaux alcalins ou d'ammonium d'acides alkylphosphoniques linéaires en C₈-C₁₂, les sels de métaux alcalins ou d'ammonium d'esters des acides alkylphosphoriques en C₁₀-C₁₈ à chaîne droite ou ramifiée polyalcoxylés, les alkylarylphosphates polyalcoxylés, ainsi que les sels de métaux alcalins ou d'ammonium de monoesters et de diesters d'acides alkylphosphoriques en C₁₀-C₁₈ à chaîne droite ou ramifiée, ainsi que les mélanges des émulsifiants mentionnés.

4. Objet moulé en béton selon la revendication 1, **caractérisé en ce que**, outre l'émulsifiant anionique comportant au moins un groupe phosphate et/ou phosphonate, on est en présence d'un autre émulsifiant anionique ayant au moins un groupe sulfate ou sulfonate.

5. Objet moulé en béton selon la revendication 1, **caractérisé en ce que** la dispersion aqueuse de polymères contient un polymère en émulsion, qui dérive d'un mélange de monomères ayant la composition suivante :
i) 85 à 99,8 % en poids de l'ester de l'acide acrylique et d'alcanols en C₁ à C₁₂, d'un ester de l'acide méthacrylique et d'alcanols en C₁ à C₁₂ et/ou de monomères vinylaromatiques,
ii) 0,2 à 5 % en poids d'acides carboxyliques copolymérisables, de carboxamides copolymérisables, de phosphates et/ou de phosphonates copolymérisables, de sulfates copolymérisables et/ou d'acides sulfoniques copolymérisables, et de leurs sels, servant de monomères stabilisants, et
iii) 0 à 10 % en poids d'autres monomères.

6. Objet moulé en béton selon la revendication 5, **caractérisé en ce que** les monomères i) sont des esters de l'acide acrylique et de l'acide méthacrylique de monoalcools en C₁ à C₁₂ et/ou des monomères vinylaromatiques, en particulier des combinaisons d'acrylate de butyle et d'acrylate de 2-éthylhexyle avec du méthacrylate de méthyle, du méthacrylate de cyclohexyle et du styrène.

7. Objet moulé en béton selon la revendication 5, **caractérisé en ce que** les monomères ii) sont choisis dans le groupe consistant en l'acide acrylique, l'acide méthacrylique, l'acide itaconique, l'acrylamide, le méthacrylamide, le méthènesulfonate de sodium, les (méth)acrylates de sulfoalkyle, les sulfoalkyl(méth)-acrylamides et leurs mélanges.

8. Objet moulé en béton selon la revendication 5, **caractérisé en ce que** les monomères iii) sont des monomères contenant des groupes céto, de préférence des monomères contenant des groupes acétoacétoxy, en particulier le méthacrylate d'acétoacétoxyéthyle, le méthacrylate d'acétoacétoxybutyle, l'acrylamidométhylacétylacétone et l'acétoacétate de vinyle, et les dérivés polymérisables de la diacétone, en particulier le diacétonacrylamide et le diacétoneméthacrylamide.

9. Objet moulé en béton selon la revendication 5, **caractérisé en ce que** les monomères iii) sont choisis dans le groupe consistant en les (méth)acrylates d'hydroxyalkyle, les (méth)acrylates de glycidyle, les alcoxyvinylsilanes, les (méth)acryloyloxyalkylsilanes, les phosphates de (méth)acryloyloxyalkyle et les dérivés polymérisables de l'éthylène-urée, et leurs combinaisons.

10. Objet moulé en béton selon la revendication 8, **caractérisé en ce que** les monomères contenant des groupes céto sont additionnés d'hydrazides d'acides carboxyliques polyfonctionnels, qui contiennent au moins deux groupes hydrazide.

11. Procédé de fabrication des objets moulés en béton selon la revendication 1, comprenant les étapes suivantes :
a) fabrication d'un objet moulé à partir d'un mélange à mouler minéral, lié à du ciment, et non encore durci,
b) application, sur au moins une surface de l'objet moulé fabriqué dans l'étape a), d'une masse de revêtement minérale liée à du ciment et colorée dans la masse (coulis de ciment),
c) application, sur la ou les surfaces pourvues du coulis de ciment du mélange à mouler minéral lié à du ciment et non encore durci, d'un vernis transparent contenant une dispersion aqueuse de polymères, qui est stabilisé avec des émulsifiants anioniques contenant au moins un groupe phosphate et/ou phosphonate, et servant de liant, et
d) durcissement, d'une manière connue en soi, de l'objet moulé et des couches du coulis de ciment et du vernis transparent.

12. Procédé selon la revendication 11, **caractérisé en ce que** les dispersions aqueuses de polymères possèdent une température minimale de formation du feuil comprise dans la plage de 0 à 80°C, et ont été préparées par polymérisation en émulsion, par utilisation d'émulsifiants anioniques comportant au moins un groupe phosphate et/ou phosphonate.

13. Utilisation des objets moulés en béton selon la revendication 1 en tant que matériaux de construction, en particulier sous forme de plaques ou de tubes, ou sous forme de tuiles.
